# EUROPEAN PATENT APPLICATION

(11) **EP 4 647 891 A1**
(43) Date of publication of application: **12.11.2025**
(21) Application number: 24175070.2
(22) Date of filing: 09.05.2024
(51) Int. Cl.: G06F 3/16, H04R 1/10

(54) **SYSTEMS AND METHODS FOR AUTOMATIC AUDIO ROUTING BETWEEN DEVICES AND PERIPHERALS**

(71) Applicant: Bang & Olufsen A/S, 7600 Struer (DK)
(72) Inventor: Magnussen, Magnus Søgaard, Struer (DK)
(74) Representative: Shipp, Nicholas

(57) **Abstract**

This disclosure relates to systems and methods for improving routing of an audio output signal from an electronic device to an audio output device. Such a system can include at least one inertial measurement unit (IMU) arranged in the audio output device; and at least one processor configured to: receive data from the at least one IMU, determine a current status of the audio output device from the received data as either worn or unworn, route an audio output signal from the electronic device to the audio output device if the current status of the audio output device is worn, and route the audio output signal to an audio output of the electronic device if the current status of the audio output device is unworn.

## Description

### TECHNICAL FIELD

Embodiments of the present disclosure relate generally to consumer electronic devices and more particularly to systems and methods for handling and routing audio output between an electronic device and one or more peripheral audio output devices communicatively coupled with the electronic device.

### BACKGROUND

Electronic device management is conventionally accomplished by a user manually controlling features of the device through inputs such as buttons, dials, and touch surfaces or touch screens. This manual control of device features can be cumbersome and detract from the overall user experience when interacting with the electronic device.

In particular, challenges exist in routing audio output from electronic devices, like smart phones and laptops, to peripheral devices such as headphones, earphones or earbuds, and speakers. These challenges are acute for incoming audio or audio/visual calls. Many user interfaces present to the user several different options, and with the incoming call chiming and flashing on the screen it can be difficult for a user to quickly identify and select the desired option from among those presented before the call goes to voicemail or the caller hangs up.

Conventional approaches to addressing these challenges often rely on own-brand solutions, in which simplifications or shortcuts can be taken when the maker of the electronic device is also the maker of the audio peripheral device. Other conventional approaches use strict user settings to route calls in an "if/then" manner, without giving users the opportunity to make different selections on the fly.

### SUMMARY

Accordingly, needs remain to address these deficiencies.

Various embodiments of the present disclosure aim to address the above problems, including by making the routing of audio output from electronic devices to one or more desired audio output devices easier for a user to select and manage.

In one embodiment, a system for improving routing of an audio output signal from an electronic device to an audio output device comprises at least one inertial measurement unit (IMU) arranged in the audio output device; and at least one processor configured to: receive data from the at least one IMU, determine a current status of the audio output device from the received data as either worn or unworn, route an audio output signal from the electronic device to the audio output device if the current status of the audio output device is worn, and route the audio output signal to an audio output of the electronic device if the current status of the audio output device is unworn.

In another embodiment, a method of routing of an audio output signal from an electronic device to an audio output device comprises obtaining data from at least one inertial measurement unit (IMU) of the audio output device; from the obtained data, determining a current status of the audio output device as either worn or unworn; routing an audio output signal from the electronic device to the audio output device if the current status of the audio output device is worn; and routing the audio output signal to an audio output of the electronic device if the current status of the audio output device is unworn.

The above summary is not intended to describe each illustrated embodiment or every implementation of the subject matter hereof. The figures and the detailed description that follow more particularly exemplify various embodiments.

### BRIEF DESCRIPTION OF THE DRAWINGS

Subject matter hereof may be more completely understood in consideration of the following detailed description of various embodiments in connection with the accompanying figures, in which:
FIG. 1 depicts a set of headphones according to one embodiment.
FIG. 2A is a partial view of the set of headphones of FIG. 1.
FIG. 2B is a detail view of part of FIG. 2A.
FIG. 3A depicts a set of headphones and related pickup angle range according to one embodiment.
FIG. 3B depicts a set of headphones and related pickup angle range according to another embodiment.
FIG. 4 is a block diagram of a system according to one embodiment.
FIG. 5 is a flow diagram according to one embodiment.
FIG. 6 is a flow diagram according to another embodiment.
FIG. 7 is another flow diagram according to an embodiment.

While various embodiments are amenable to various modifications and alternative forms, specifics thereof have been shown by way of example in the drawings and will be described in detail. It should be understood, however, that the intention is not to limit the claims to the particular embodiments described. On the contrary, the intention is to cover all modifications, equivalents, and alternatives falling within the spirit and scope of the subject matter as defined by the claims.

### DETAILED DESCRIPTION

Embodiments of the present disclosure are related to improving audio output routing from electronic devices to audio peripheral devices, such as from smart phones to headphones. Embodiments also can include (or operate in conjunction with) improved and more intuitive user interface features, such as status lights. Both the audio output routing and the user interface features can operate in accordance with, or be dependent on, a detected use state or use case of the electronic device, the audio output device, or both. Embodiments thereby can provide seamless and intuitive audio output routing that does not require user interaction or selection.

In examples discussed herein, the electronic device typically will be a smart phone and the audio output device typically will be a set of headphones (which, generally speaking, are worn on or over the ears). These examples are used only for convenience and easy illustration of various concepts discussed herein and are not limiting with respect to other embodiments. For example, the electronic device also can comprise a tablet, an e-reader, a wearable device such as a smart watch, a laptop, a gaming console or device, a computer or other computing device, a stereo or source of streaming audio, a tuner, a "smart" home device or home automation device (e.g., a video doorbell), a camera, a television, a home theater system, an appliance, a fitness device (e.g., a stationary bike), a vehicle, or some other device capable of providing an audio signal to an audio output device - generally speaking, an "electronic device." Similarly, the audio output device also can comprise earbuds (generally worn in the ears), earphones (generally worn on or over the ears), a headset (which may have only one earpiece or earphone unit), a garment or other wearable having a speaker or earphone embedded therein or coupled thereto (e.g., a hat, a headband, helmet, glasses, or goggles with an integrated speaker or earphone), a home furnishing (e.g., a chair, sofa, pillow, or cushion with an integrated speaker), a loudspeaker, a portable speaker unit, a vehicle component (e.g., a headrest or seat with an integrated loudspeaker), or virtually any other device in which a speaker or earphone can be embedded or to which an electronic device can provide an audio signal for output - thus, generally speaking, an "audio output device."

In some embodiments, the electronic device and the audio output device can be one and the same (or integrated), such as a vehicle, a smart phone, a gaming device or system, etc. In other embodiments, the electronic device and the audio output device are wirelessly coupled, such as via BLUETOOTH, WIFI, NFC, or some other wireless communication protocol. In still other embodiments, the electronic device and the audio output device are coupled via wire.

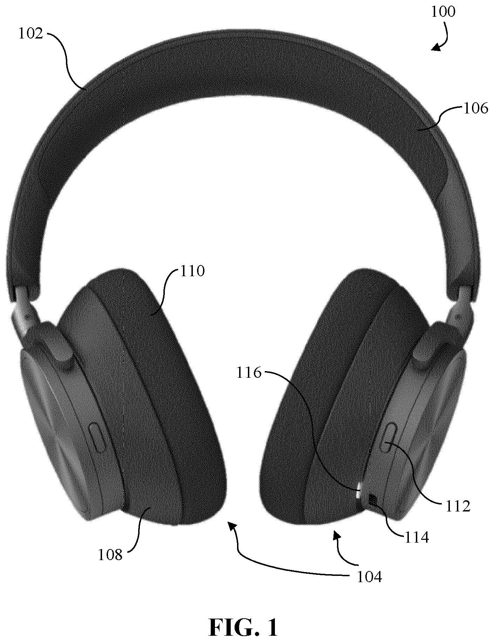

With this introduction, reference is now made to FIG. 1, which depicts a set of headphones 100 according to an embodiment. Headphones 100 comprise a headband 102 pivotally or flexibly coupling earphone units 104 at opposing ends. Headband 102 can be adjustable such that the length of headband 102 between earphone units 104 can be shortened or lengthened or otherwise adjusted to better or more comfortably fit a particular user. Headband 102 can optionally include a padded portion 106 to further improve user comfort when worn.

Each earphone unit 104 comprises an earcup 108 and an ear cushion 110. Earcups 108 house electrical components, such as speaker drivers and related circuitry, configured to produce sound and project the sound within ear cushions 110, towards the ears of a user when headphones 100 are worn.

One or more exterior surfaces or parts of each earcup 108 can include at least one input 112 that can be used to receive user input. Input 112 can be one or more of buttons, sliders, touch sensitive surfaces, and the like. Input 112 can be configured to receive user input to control, e.g., power, volume, noise cancelation, fit, comfort, sound proofing, and other features of headphones 100. Input 112 can be located anywhere on headphones 100 such that input 112 remains accessible for manual user input when worn or needed by a user.

In some embodiments, earcups 108 can further include one or more input ports 114 configured to receive a cable connector and one or more indicators 116, such as a light emitting diode (LED), configured to convey status information of headphones 100. These input ports 114 can include audio ports or jacks, such as USB or minijack as examples. The arrangement of input 112, input ports 114, and indicator lights 116 can vary between earcups 108 (e.g., left vs. right) or on different embodiments or versions of headphones 100.

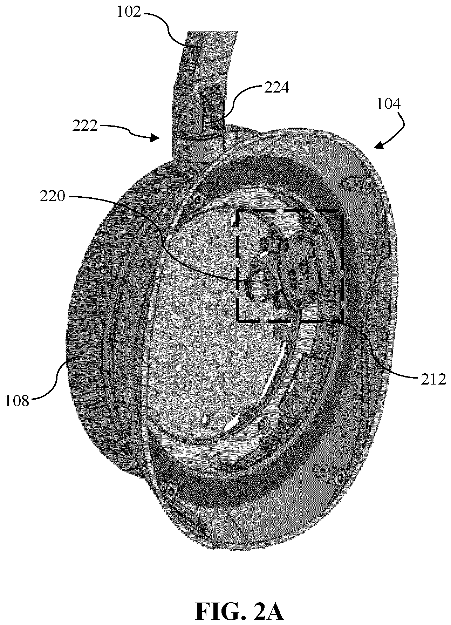

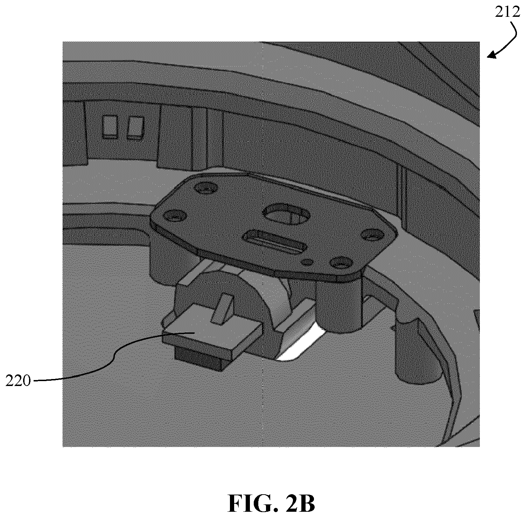

Referring to FIGS. 2A and 2B, an interior portion of earphone unit 104 coupled to headband 102 is depicted in FIG. 2A according to an embodiment. FIG. 2B is a rotated close-up perspective view of region 212 of earphone unit 104 of FIG. 2A. Earphone unit 104 includes earcup 108 configured to contain a speaker driver (not shown), at least one sensor 220, and processing hardware (not shown). Earphone unit 104 is coupled as previously mentioned to headband 102 via a coupling mechanism 222 that includes a hinge 224 in this embodiment. Other coupling mechanisms can be used in other embodiments.

In some embodiments, sensor 220 comprises an inertial measurement unit (IMU). The IMU can comprise at least one accelerometer and at least one gyroscope. The IMU also can comprise a magnetometer or other sensing devices in other embodiments. In one embodiment, each earphone unit 104 of headphones 100 comprises an IMU.

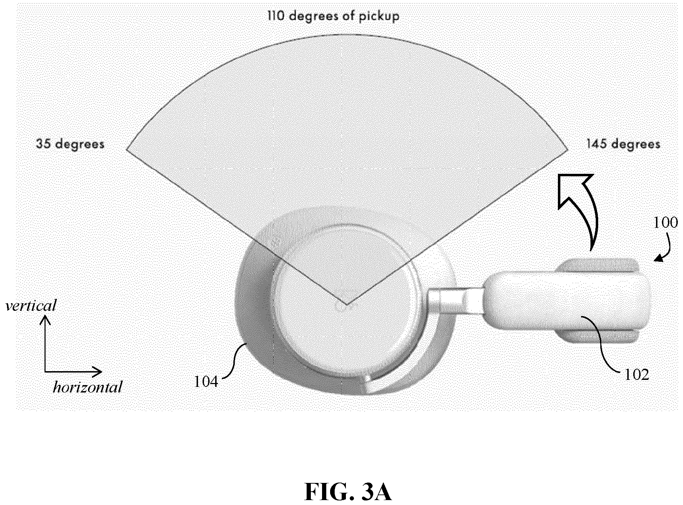

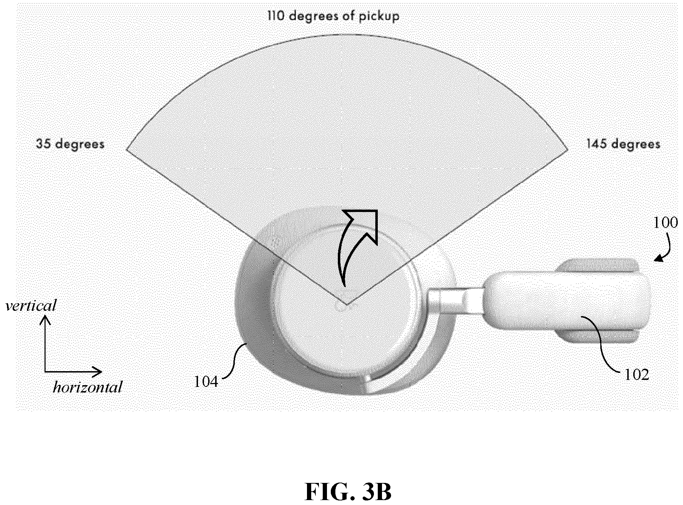

In operation and with reference to FIGS. 3A and 3B, the IMU(s) can measure one or more of a specific force, an angular rate, or an orientation related to headphones 100. Thus, the IMU(s) can have a static or dynamic (e.g., selectable or adjustable) range, such as across approximately (e.g., plus/minus 10 degrees) 110 degrees in FIGS. 3A and 3B, in which an orientation of headphones 100 can be measured. In the embodiment of FIG. 3A and 3B, the range of 110 degrees begins and ends about 35 degrees from horizontal.

In other embodiments, both the range and the angle from horizontal can vary. In some embodiments, any angle change greater than 35 degrees, such as at least 35 degrees, at least 45 degrees, at least 60 degrees, at least 75 degrees, and at least 90 degrees, can be detected quickly (e.g., within about 0.5 seconds, or less than about 1 second). This can be done for a variety of reasons, for example for readying headphones 100 and showing a related status via indicator lights 116.

In some embodiments, at least one of the range or the angle from horizontal (reference included in FIGS. 3A and 3B) can be selectable or adjustable. The ranges and angles discussed by example here generally assume an upright or in-use position in which headband 102 is worn across the top of the head of a user and each earphone unit 104 is worn over an ear of the user and arranged generally vertically.

Thus, if a user were to pick up headphones 100 from the orientation depicted in FIG. 3A and held headphones 100 at approximately 45 degrees from horizontal in preparation for putting on headphones 100 (i.e., headband 102 is rotated up, generally in the direction of the arrow in FIG. 3A), the IMU(s) could detect that headphones 100 had moved or changed orientation. This can enable sensing or detecting of a position of headphones 100, including if headphones 100 are:
- Laying on a table or other surface.
- Held in a user's hands in preparation for wear.
- Being worn on a user's head and over both ears.
- Being word on a user's head with only one earcup 108 worn over an ear.
- Being worn around a user's neck.
- Hanging on a stand.
Some of these positions or wear cases can also use data from additional sensors in headphones 100, as will be discussed in more detail below. Whether solely by the IMU(s) or also considering data and measurements from other sensors 220 of headphones 100, embodiments of this disclosure make possible intuitive detection of, e.g., when headphones 100 are put on, taken off, worn completely, worn partially, held in the hands, etc. This intuitive detection can be used to activate, deactivate, or change operation of one or more features of headphones 100 or a coupled electronic device.

In another example related to FIG. 3A, an orientation of headphones 100 as detected by the IMUs can be used to turn on or "wake" headphones 100. Assume headphones 100 have been laying on a desk or other surface in a generally horizontal orientation as is shown in FIG. 3A for some time. An elapsing of time with no change in position detected can cause headphones 100 to automatically enter a "sleep" mode or to power off completely. If a user then picks up headphones 100 or tilts headphones 100 at least 35 degrees from horizontal (e.g., such that headband 102 is raised into the 110 degrees of pickup illustrated in FIG. 3A), headphones 100 can wake or power on in some embodiments.

In another similar example now related to FIG. 3B, again assume headphones 100 are laying on a surface and are off or in sleep mode. If a user picks up headphones 100 by raising earphone units 104 at least 35 degrees from horizontal (as shown by the arrow in FIG. 3B) such that earphone units 104 are raised into the 110 degrees of pickup illustrated in FIG. 3B), headphones 100 can wake or power on. This movement - raising earphone units 104 or tilting headphones 100 such that headband 102 rotates downwardly - can be useful in order for a user to check indicator 116. A so-called "tilt to check" feature can enable a user to tilt or turn headphones 100 upside down. When this movement or orientation is detected by the IMU(s), indicator 116 can provide status information of headphones 100, such as a color or pattern of illumination of one or more LEDs of indicator 116. A red LED may indicate headphones 100 are powered off. A flashing LED can indicate headphones 100 are in a sleep or low power mode. A white or green LED can indicate headphones 100 are on and active. A blue LED can indicate that headphones 100 are ready in a BLUETOOTH pairing mode.

In other examples, tilting headphones 100 in a particular orientation as described above can cause headphones 100 to automatically wake or turn on. Moving or tilting headphones in another orientation or way can cause other activity, such as powering off headphones 100 or disabling a feature (e.g., pausing audio output). Some of these features, such as auto on or off, can depend on whether these features are available or activated on headphones 100, as activation of some features may be user-selectable.

These particular examples are not critical, and neither is the particular type or placement of indicator 116. A point of these examples is that moving or tilting headphones 100 in various ways or orientations can result in a feature or status of headphones 100 to activate, deactivate, or change, generally in ways that are intuitive to a user.

In addition to one or more IMUs to provide this activation, deactivation, or change of or related to headphones, headphones 100 also can comprise at least one additional (or alternative) sensor modality in at least one sensor 220. For example, in one embodiment, at least one sensor 220 also comprises a force sensor configured to detect at least one characteristic related to headphones 100, such as a force exerted on one or both of earphone units 104 by headband 102 or another object. For example, when headphones 100 are worn on a user's head, headband 102 is biased to flex or bend outwardly in order to exert a generally inward force (i.e., towards the head or ears of a user) on each earphone unit 104. This bias provides a good "seal" of ear cushions 110 around each ear of the user for a better audio experience (e.g., improved noise canceling) but is not so strong that it interferes with a comfortable fit.

In some embodiments, additional sensor modalities that can be included in sensors 220 and headphones 100 include an accelerometer to sense acceleration, a gyroscope to sense orientation, a magnetometer or Hall-effect sensor to sense magnetic field, a proximity sensor, a capacitive touch sensor to tense touch, a millimeter (MM) wave sensor to sense reflected signals that indicate angle, range, and velocity of sensed objects, an infrared sensor to sense heat radiation, a temperature sensor to sense temperature, a humidity sensor to sense humidity, or one or more other sensors known to those of skill in the art. In embodiments in which a plurality of sensor modalities is implemented, so-called "sensor fusion" can be implemented by or for headphones 100. Sensor fusion combines data from multiple sensors or sources such that processing of the data reduces uncertainty or provides additional information than a single sensor modality might alone.

Regardless of number and modality, sensor(s) 220 are communicatively coupled to on-board processing hardware that can comprise at least one processor and memory, on which can reside firmware/software. In some embodiments, data collected by sensor 220 can be, instead or additionally, communicated to a server or electronic device communicatively coupled to and remote from headphones 100 (e.g., an electronic device such as a smart phone).

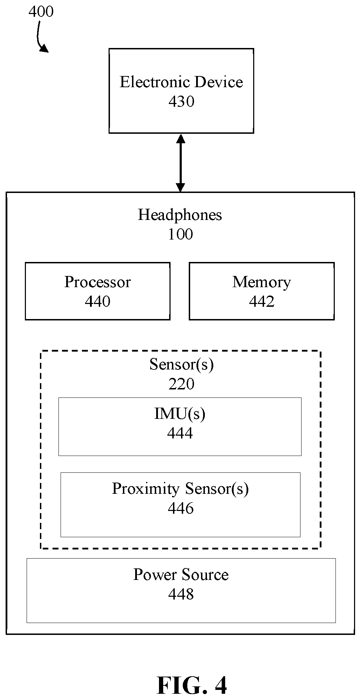

Thus, referring to FIG. 4, a block diagram of a system 400 for detecting a use state of headphones 100 is depicted according to an embodiment. System 400 comprises headphones 100 and an electronic device 430. Headphones 100 generally comprise a processor 440, memory 442, one or more sensors 220, one or more IMU sensors 444, one or more proximity sensors 446, and at least one power source 448.

System 400 can be used to determine a use state of headphones 100 (e.g., worn for active use vs. not worn vs. partially worn) that can be used to configure one or more features or operations of headphones 100. As discussed elsewhere herein, features and concepts of this disclosure discussed in examples related to headphones 100 can be used in or with, or applied to, other devices, such as in-ear earphones and other electronic devices having user interface features for which it may be desired or helpful to determine a use state and configure or control one or more features or operations based on the determined use state. Thus, in various embodiments headphones 100 instead can be any electronic device that incorporates one or more earphone units, including at least in-ear earbuds or on-ear headphones. Headphones 100 can instead comprise a different wearable electronic device, such as a virtual reality (VR) headset, an augmented reality (AR) headset, a smart watch, smart glasses, smart jewelry or another smart accessory, a gaming device, a medical or health device, or some other electronic device worn or used on or close to a user's body or body part.

Processor 440 (as well as any other processor, processing device, or engine discussed herein) can be any programmable device that accepts digital data as input, is configured to process the input according to instructions or algorithms and provides results as outputs. In an embodiment, processor 440 can be a central processing unit (CPU) or a microcontroller or microprocessor configured to carry out the instructions of a computer program. Processor 440 is therefore configured to perform at least basic arithmetical, logical, and input/output operations.

In some embodiments, processor 440 can comprise or implement one or more engines. The use of the term "engine" herein refers to any hardware or software that is constructed, programmed, configured, or otherwise adapted to autonomously carry out a function or set of functions, such as detecting electronic device 430. Processors and engines as referred to herein are any real-world devices, components, or arrangements of components implemented using hardware, such as by an application specific integrated circuit (ASIC) or field programmable gate array (FPGA), for example, or as a combination of hardware and software, such as by a microprocessor system and a set of program instructions that adapt the processor or engine to implement the particular functionality, which (while being executed) transform the microprocessor system into a special-purpose device. A processor or engine can also be implemented as a combination of the two, with certain functions facilitated by hardware alone, and other functions facilitated by a combination of hardware and software.

In certain implementations, at least a portion, and in some cases, all, of an engine can be executed on the processor(s) of one or more computing platforms that are made up of hardware (e.g., one or more processors, data storage devices such as memory or drive storage, input/output facilities such as network interface devices, video devices, keyboard, mouse or touchscreen devices, etc.) that execute an operating system, system programs, and application programs, while also implementing the engine using multitasking, multithreading, distributed (e.g., cluster, peer-peer, cloud, etc.) processing where appropriate, or other such techniques. Accordingly, any processor or engine discussed herein can be realized in a variety of physically realizable configurations and should generally not be limited to any particular implementation exemplified herein, unless such limitations are expressly called out.

In embodiments, each processor or engine can itself be composed of one or more sub-processors or sub-engines, each of which can be regarded as a processor or engine in its own right. Moreover, in the embodiments described herein, processor 440 can correspond to defined autonomous functionality, wherein a use state of headphones 100 can be determined without need for additional manual input from the user. It should be understood, however, that in other contemplated embodiments, functionality can be distributed to more than one processor or engine, regardless of any example description or depiction herein. Likewise, in other contemplated embodiments, multiple defined functionalities may be implemented by a single processor or engine that performs those multiple functions, possibly alongside other functions, or distributed differently among a set of processors or engines than specifically illustrated in the examples herein.

Therefore, headphones 100 can comprise any number or type of processor 440. In one embodiment, processor 440 can be located within or local to headphones 100. In alternate embodiments, processor 440 can operate on a device or server remote from headphones 100, such as on electronic device 430 (e.g., as part of an application operating or presented on electronic device 430) or in the cloud.

Memory 442 can comprise volatile or non-volatile memory as required by the coupled processor 440 to not only provide space to execute the instructions or algorithms, but to provide the space to store the instructions themselves. In embodiments, volatile memory can include random access memory (RAM), dynamic random access memory (DRAM), or static random access memory (SRAM), for example. In embodiments, non-volatile memory can include read-only memory (ROM), flash memory, ferroelectric RAM, hard disk, or optical disc storage, for example. The foregoing lists in no way limit the type of memory that can be used, as these embodiments are given only by way of example and are not intended to limit the scope of the present disclosure.

Power source 448 is typically a rechargeable battery. Some embodiments may use single-use, replaceable batteries. Still other embodiments may have the ability to receive power directly from an AC or DC source, such as a wall outlet, laptop, computer, tablet, video display device (such as an in-flight airplane entertainment system), or some other source.

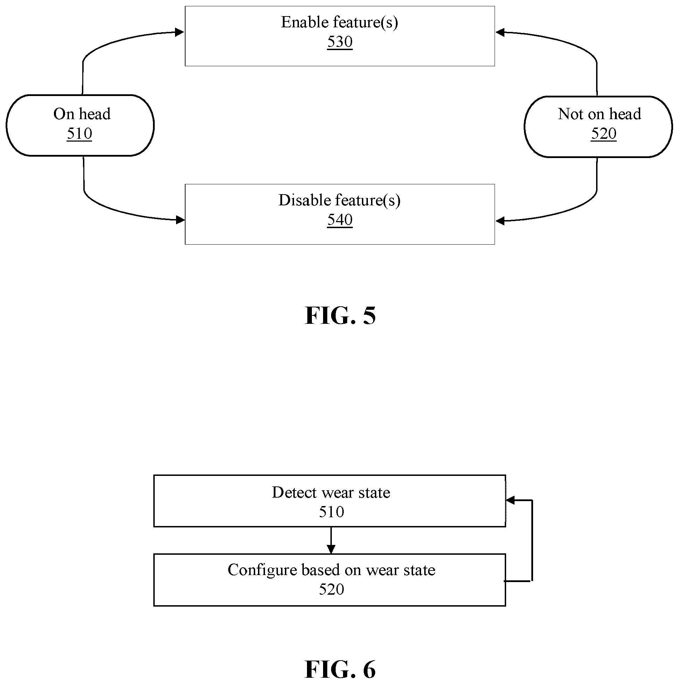

In various embodiments, one or more of sensors 220, IMUs 444, 446 (or other sensors, components, or devices) that may be part of headphones 100 in other embodiments, can be used to detect a use state, position, orientation, or other characteristic of headphones 100. Referring also to FIG. 5, which uses a wear state (on head vs. not on head), the detected use state 510 or 520 of headphones 100 can be used to determine, change, or customize one or more features of headphones 100 at 530 and 540. Thus, one or more features can be enabled at 530 if headphones are determined to be on a user's head at 510, and vice-versa at 540 and 520. This can be reversed in other embodiments, or some features may be enabled while others are disabled at the same time, at 530, if wear is detected at 510.

For example, if headphones 100 are detected on a user's head at 510, then an LED on headphones 100 might be turned off and sound may be output to or by headphones 100. In another example, if headphones 100 are not detected as being word on a user's head at 520, then an LED can be turned on and Bluetooth can be turned off. Considering sensor fusion previously mentioned and returning to the examples above related to FIGS. 3A and 3B, Table 1 lists several examples.

**Table 1: Indicator Behaviors and Related Sensor(s)**

| Behavior | Action | Sensor(s) |
|---|---|---|
| Remove headphones from head | Trigger status indicator/LED | IMUs, force, proximity |
| Remove headphones with auto on/off enabled | Trigger status indicator/LED (brief) | IMUs, force, proximity |
| Remove headphones with auto on/off disabled | Trigger status indicator/LED (continuous) | IMUs, force, proximity |
| Headphones off head and rotated/tilted down (indicator/LED up) | Trigger status indicator/LED (brief) | IMUs |
| Headphones off head and earcup double-tapped | Trigger status indicator/LED (brief) | IMUs |
| Headphones removed from storage case/pouch | Trigger status indicator/LED (brief) | IMUs, Hall effect |

These and other examples provided herein are only some possible results of detecting a use case, wear, position/orientation, or other characteristic of or related to headphones 100. Other examples include features that may be activated or deactivated, alone or in any combination with any other features discussed herein throughout, include whether or which sensors 220, 444, 446 are active; whether a status LED or other indicator is on, off, operating intermittently (e.g., flashing), or changing color; whether a user interface is or should be active to accept user input or types of user input or to provide or display output to a user; whether noise cancelling is on, off, or set in a particular way (e.g., in transparency mode); a use or output mode (e.g., running mode, in which the sound of a user's feet hitting the ground is minimized or removed via active noise cancelation, ANC); a volume setting; an input or output source; or some other setting or feature.

In various embodiments, one or more of sensors 220, 444, 446 can be configured to detect a use state of headphones 100 at 510. For example, if force on headband 102 consistent with headphones 100 being placed or worn on a user's head is sensed by sensor 220 (e.g., a force sensor), then processor 440 can be configured to activate at least one IMU sensor 444 such that IMU sensor 444 can be used to detect additional information related to usage of headphones 100, like a specific force, rate, or orientation of a force. If IMU sensor 444 senses that the force detected is localized to headband 102 and headband 102 extends sufficiently in comparison to a threshold value, then processor 440 can activate other corresponding sensors, such as proximity sensors 446.

In another example in which there is at least one IMU sensor 444 in each earcup 104 of headphones 100, data from the at least two IMU sensors 444 can be considered. In one embodiment, this can comprise comparing the data from the two IMU sensors 444 in order to detect when earcups 104 are facing each other. In some implementations, the at least two IMU sensors 444 can also provide data indicating relative positioning in order to determine whether or not, or an extent to which, headband 102 is extended. Still other embodiments can additionally use data from other sensors 220 (e.g., force sensor).

By using proximity sensors 446 and IMU sensors 444 in headphones 100, sensor fusion techniques can be used to have more confidence in the use state determination process, such as orientation of force, rate of force, type of force, surface feel of force (e.g., whether human skin is detected), etc. For example, if a change in force in or on headphones 100 is detected by sensor 220 (e.g., when sensor 220 comprises a force sensor), processor 440 can transmit signals to activate IMU sensor 444 and proximity sensor 446, whereupon IMU sensor 444 can be configured to detect an orientation of the force with respect to headphones 100 (for example, whether the detected change in force is from an extension of headband 102 as headphones 100 are put on or a retraction of headband 102 as headphones 100 are taken off, etc.) and proximity sensor 446 can be configured to detect a proximity of headphones 100 to a user (for example, whether human skin is detected near or against ear cushion 110).

Table 2 below provides an embodiment of typical load and sensor values which can trigger communication between a force sensor and processor 440.

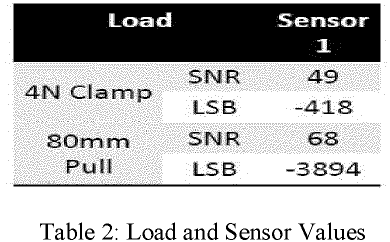

As in the example just above, the force sensor can be configured to detect changes in force related to extensions or retractions (or flexing) of headband 102. The values in Table 2 show that as headband 102 is extended, load output increases. In some implementations, the force sensor can have sufficient sensitivity to detect headband 102 extending or retracting as a user chews or speaks when wearing headphones 100, with related smaller force changes observed in slight fluctuations of LSB output. Larger force changes, such as a user taking off headphones 100, result in larger changes in the LSB output. Signal to noise ratio (SNR) indicates an efficiency of each of the plurality of sensors, measured as a ratio of amplitude of a desired signal to amplitude of noise signals at a given point in time. The higher the SNR value, the more sensitive the force sensor is to perceiving changes in LSB.

Particular patterns of force may also be detected, such as a user moving one earphone unit 104 off of one ear while the other earphone unit 104 remains on the other ear, or a user moving both earphone units 104 behind, in front of, or above their ears, or on their neck. In some embodiments, force sensors can detect these changes alone. In other embodiments, combinations of sensors 220 can be used to determine a use (or other) state of headphones 100 at 510, 520.

For example, it may be easier, or wear detection may be more accurate, when each of IMU sensors 444, proximity sensors 446, and force sensors (220) are used in a sensor fusion manner. Force sensors can provide sensed data related to a state of headband 102 or padded portion 106 (or both). IMU sensors 444 can provide sensor data related to an orientation of headphones 100, such as whether the orientation is consistent with headphones 100 being worn on a user head and over both ears of the user, or whether headphones 100 are tilted, as they might be if removed from a user head and worn around the neck. Proximity sensors 446 can provide sensed data with respect to a relative position of each earphone unit 104 (or one or more portions thereof) and a user's head, ear(s), or other body part.

It can be seen how combining sensed data from these different sensor modalities can provide more accurate or additional information. For example, IMU sensors 444 may provide data that indicates that headphones 100 are being worn around a user's neck, and data from force sensors can confirm this, if the data indicates that any force acting on headband 102 is more consistent with neck wear than over-the-ear head wear. This can be further confirmed by factoring in data from proximity sensors 446, or using proximity sensors 446 and IMU sensors 444.

It is possible to implement various levels of complexity or sophistication of the enabling 530 or disabling 540 of one or more features. In particular, it is also possible to consider cooperation of headphones 100 with electronic device 430.

Some examples relate to handling of audio output from electronic device 430 to coupled headphones 100. One particular example relates to a task that can be time-sensitive and (conventionally speaking) difficult to manage. This example is routing of incoming calls (which can be audio only, or the audio associated with a video call) from a smart phone as electronic device 430 with or to headphones 100. In the example that follows, it is assumed that electronic device 430 and headphones 100 are already coupled, e.g., via BLUETOOTH.

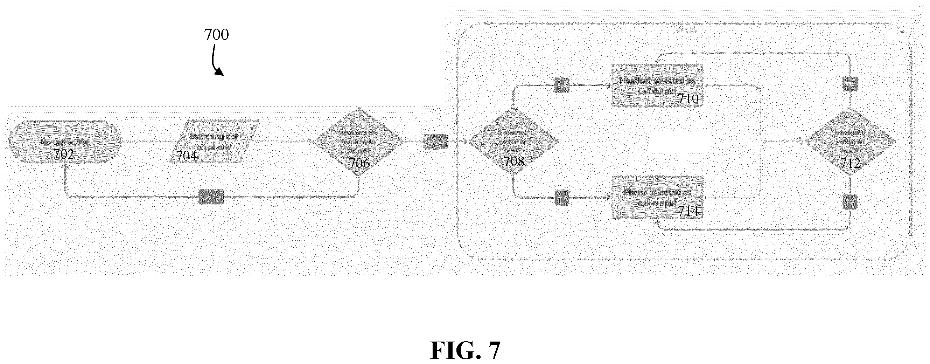

Referring to FIG. 7, an example flow 700 of call handling between electronic device 430 and headphones 100, depending on a use state of headphones 100, is depicted. At 702, there is no active call.

At 704, a new call is incoming to electronic device 430.

At 706, a user either accepts or declines the call. If the call is declined, the flow reverts to 702.

If the call is accepted, the flow continues to 708, at which point it is determined whether or not headphones 100 are being worn on the head of the user. This determination can be made according to any example included herein, such as by detecting a use state of headphones 100 via one or more sensors 220.

If the result of the determination at 708 is that headphones 100 are worn by the user, the flow proceeds to 710, at which point headphones 100 are automatically selected as the audio output device for the call. This eliminates the user having to select from among several options how to route the call, which can require quick identification and selection of an option when the call is incoming and may lead to the call being routed in an undesired way or even declined.

In some embodiments, periodic confirmation that headphones 100 are still worn during the call can take place at 712. This periodicity can be once per second or multiple times per second, such as at least 5 times per second, at least 10 times per second, at least 20 times per second, at least 30 times per second, at least 40 times per second, at least 50 times per second, or in the range of at least 5 times per second to at least 60 times per second, or in the range of at least 10 times per second to at least 50 times per second. So long as the wear state remains unchanged, so too can the audio output to headphones 100 (i.e., the routine returns from 712 to 710).

If it is determined at 712 that headphones 100 are no longer being worn, then audio output can be automatically returned to electronic device 430 at 714, without a user having to pass or return the call back.

Flow 700 of FIG. 7 can be implemented whether headphones 100 or some other audio output device (see *supra*) is used, such as earbuds. If earbuds are used, the routine can include checking whether one or both earbuds are worn, with different action taken at 710 depending on this determination. For example, if both earbuds are worn, the call can be routed at 710 just as it would have been to headphones 100. If only one earbud is worn, the audio output from electronic device 430 can be routed to only that earbud, with a microphone on that earbud also being activated for the call. In some embodiments, these behaviors and options can be customized by a user, such as via an application that works in conjunction with headphones 100 or whatever the particular audio output device is.

Additional applications of these concepts can be used. For example, flow 700 of FIG. 7 can be adapted to determine whether to route the audio of a call between a phone, a vehicle, or headphones. An incoming call may first be routed to the speakers of the vehicle. Then, if headphone wear is detected at 708, the call audio can be passed to the headphones. An additional determination of whether or not the vehicle is active may be included in such an example. Furthermore, the opposite routing also can be implemented, such as passing call audio from a headset to a vehicle when a user gets in the vehicle and removes their headphones.

Thus, these and other examples can include:

**Table 3: Example feature(s) and corresponding sensor(s)**

| **Feature(s)** | **Sensor(s)** |
|---|---|
| Call audio is routed to headphones only when the headphones are on the head | Force + proximity + IMU |
| LED is turned off when headphones are put on the head | Force + proximity + IMU |
| LED is turned on (e.g., shows status for 5 seconds) when the headphones are removed from the head | Proximity |
| Tilt to check: LED is turned on (e.g., shows status for 5 seconds) when the headphones are tilted between 35 and 145 degrees (tilting consistent with a user wanting to see the LED) | IMU + Proximity |
| LED is turned on (e.g., shows status for 5 seconds) if a double-tap is detected on the headphones when the headphones are not being worn | IMU |
| Running mode: detect running and reduce or eliminate footfall noise/sound | IMU |
| Bluetooth handling: if the headphones are turned on (auto on/off) and ears are detected in the earcups, turn on Bluetooth; if no ears are detected in the earcups, turn off Bluetooth | Force + proximity |
| Call routing: If a call is received on a connected device (e.g., smart phone) and ears are detected in the earcups, then a hands free protocol (HFP) command is sent to route/transfer the call to the headphones; if no ears are detected (headphones are not being worn or not worn fully), then the call stays on or is routed back to the connected device | Force + Proximity |
| Automatic ANC/transparency or other noise cancelation mode: if one earcup is removed from over an ear, switch to or activate transparency mode (so the user can hear from both ears); optionally take other action, such as pausing music or sound | Proximity |

As mentioned previously, it is also possible to combine these and other features based on sensed wear state or other activity. In one embodiment, these features are pre-programmed and selectable by a user for implementation. In other embodiments, a user can customize which feature(s) are implemented in different wear states or sensed uses.

These selections and customizations can be accomplished on an application ("app"), web-based application, or any other executable application framework operating on a electronic device 430 communicatively coupled with headphones 100, such as a smart phone, smart watch or other wearable such as a fitness watch or tracker, tablet, e-reader, laptop, computer, or other computing device capable of interacting with headphones 100 (such as via Bluetooth) and hosting or presenting an app to a user. The term "electronic device" is used herein throughout for convenience but is not limiting with respect to the actual features, characteristics, or composition of the or any device that could embody electronic device 430. Headphones 100 generally are configured to provide two-way data communication with electronic device 430 via a wired or wireless connection. In alternate embodiments, electronic devices with an earphone unit (e.g., earbuds) are configured to provide two-way data communication with electronic device 430 via a wired or wireless connection.

The user interface can be configured to receive user inputs and provide outputs regarding configuration and status of headphones 100, or, alternately, any electronic device featuring an earphone unit. The user interface can allow for personalized system control and calibration, such as enabling a user to calibrate one or more active use states by placing headphones in a desired position and recording sample force data. In embodiments, electronic device 430 can be associated with one or more user profiles that can each represent distinct feature handling requirements based on detected use state of headphones 100 or use state of any electronic device comprising an earphone unit.

Processor 440 can automatically configure one or more features of headphones 100 based at least in part on received sensor data. By processing sensed data related to the force (from a force sensor of sensors 220) and orientation of force (from IMU sensor 444, in one example) applied to earcup 108 from the headband 102 alongside detected capacitance or proximity (from proximity sensor 446), processor 440 can determine if headphones 100 are on a user's head, and therefore may represent an active use instance. In alternate embodiments, processor 440 can process detected sensor data from the force sensor of sensors 220, IMU sensor 444, and proximity sensor 446 to determine whether in-ear earbuds are in a user's ears, and therefore in an active use state. Still other embodiments can use sensor modalities other than capacitive and force in these and other examples. For example, some embodiments can, instead of or in addition to any sensor modalities discussed herein with respect to sensors 220, include infrared (IR) sensors, pulse sensors, ultrasonic sensors, or other sensor modalities.

In particular, a relative increase in force when headband 102 is extended (e.g., worn around or over a user's head) can be implemented within processor 440 to recognize an active use state or an inactive use state and to control features of headphones 100 accordingly. Active use states can include any situation in which a user would likely desire the headphones to produce sound, provide noise cancelling functionality, or produce other output. Inactive use states can include one or more of headphones 100 being placed on a flat surface, folded, stowed in a storage case, worn around the neck, placed on a headphone stand, or held by a user, among others.

In alternate embodiments, processor 440 can recognize the difference in force exerted on an exterior surface of an electronic device comprising an earphone unit (such as, for example, in-ear earbuds rather than over-ear headphones) to determine whether a use state is active or inactive. As indicated above, active use states can include any situation in which a user would likely desire the electronic device to produce sound or provide noise cancelling functionality. Inactive use states can include one or more of the electronic device being placed on a flat surface, folded, stowed in a case or container, placed on a stand, or held by a user, among others.

Embodiments of the present disclosure can optionally implement artificial intelligence (AI) or machine learning (ML) to better recognize patterns or changes in sensor data associated with putting on, wearing, taking off, tilting, and other handling of headphones 100, earphones, or other electronic devices. Patterns or changes in, e.g., sensed forces on headphones 100 when changing use or wear states can be extracted manually or automatically by machine learning approaches such as convolutional neural networks to produce training data that can be compared to received data during use. Accordingly, an ML model can be applied to labelled (supervised) sensor data (data representing known use state transitions) by processor 440. In embodiments, unlabeled (unsupervised) sensor data can be used although accuracy and precision of the ML model will perform comparatively worse without additional training.

With training, the ML model can better recognize when differences in sensor data may belong to use state transitions. In embodiments, the comparison process can be accomplished by computing similarity metrics using correlation or machine learning regression algorithms. For example, if the similarity of a "take off headphones" gesture is above a certain threshold, (e.g., 75%, 90%, 95% or 99% similarity) the matching process can determine that the received sensor data indicates a change of use state and features of headphones 100 can be controlled accordingly, such as powering down headphones 100.

This analysis can be improved by inclusion of feedback loops directed to classifying sensor data patterns for particular users. Alternate embodiments can include analyzing gestures pertaining to headphones 100, earphones, or other electronic devices. For example, a "take out earbuds" gesture can be above a certain threshold (as discussed earlier in the example regarding headphones 100). As more comparisons between received data and training data are made, feedback of the accuracy of previous comparisons can be tracked to better recognize future sensor data patterns.

In embodiments, processor 440 also can implement one or more classifiers to consider parameters such as type of electronic device (e.g., headphones 100 vs. earphones vs. VR goggles) and type of force sensor 220, IMU sensor 444, and proximity sensor 446.

In operation, force applied to an exterior of one or both earcups 108 by headband 102 (or a user's head or ear(s)) can automatically trigger a signal to power on IMU sensor 444 and proximity sensor 446. Force sensor 220, which can be located inside one or both earcups 108 of headphones 100 or on or in an earbud, can work alongside IMU sensor 444 and proximity sensor 446 to detect a change in force from headband 102 to earcup 108, wherein detected force can be both positive (e.g., expanding or extending headband 102/moving earcups 108 away from each other) and negative (relaxing or retracting headband 102/moving earcups 108 closer together) direction. This detected change in force can automatically trigger an electronic device such as headphones 100 to automatically power on and can also automatically trigger control of features based on an active use state, which can include (among others mentioned herein) establishing or disconnecting a Bluetooth connection of electronic device such as headphones 100 with electronic device 430, routing of a call, enabling or disabling of user input mechanisms of electronic device such as headphones 100 (such as a touch-based user interface), resuming or pausing media playback, changing playback volume, and changing between active noise cancellation level mode and transparency mode.

In embodiments, AI or ML systems may be included in or communicatively coupled to processor 440 to further enable the headphones 100 or electronic device to respond with one or more settings or features based on the received data from sensors, including sensors 220, 444, 446 in combination with data received from one or more other sources, including the electronic device 430 or other sources. This data can include location data, calendar data, proprioceptive data, health and wellness data, or other relevant user data. For example, one or more profiles could be created in response to the AI system's data processing to reflect a user's typical behavior, activities, or preferred settings.

Embodiments of the present disclosure accordingly provide for use state detection and subsequent control of one or both an electronic device and headphones or in-ear earbuds, such as for improved or automatic routing of call audio and provision of status information via indicators such as LEDs. By combining sensor modalities and data (e.g., wear detection and force) and processing this data effectively, use of these devices and routing of audio signals can be made more convenient and intuitive.

It should be understood that examples discussed herein also can apply in situations in which a plurality of audio output devices are used. For example, a home theater system may have multiple sets of headphones for users to wear such that audio from a music system (stereo or streaming source) and television can be enjoyed together. Audio signals can be routed only to those devices that are determined to be active or worn.

The following clauses are part of the present disclosure:
Clause 1: A system for improving routing of an audio output signal from an electronic device to an audio output device, the system comprising: at least one inertial measurement unit (IMU) arranged in the audio output device; and at least one processor configured to: receive data from the at least one IMU, determine a current status of the audio output device from the received data as either worn or unworn, route an audio output signal from the electronic device to the audio output device if the current status of the audio output device is worn, and route the audio output signal to an audio output of the electronic device if the current status of the audio output device is unworn.
Clause 2: The system of clause 1, wherein the audio output device comprises: an earbud having one IMU; a set of two earbuds with a first IMU arranged in a first one of the two earbuds and a second IMU arranged in a second one of the two earbuds; or a set of headphones with a first IMU arranged in a first earphone unit of the set of headphones and a second IMU arranged in a second earphone unit of the set of headphones.
Clause 3: The system of clause 1 or clause 2, wherein the electronic device is a smart phone, a tablet, an e-reader, a wearable device, a smart watch, a laptop, a gaming device, a computer, a stereo, a tuner, a smart home device, a home automation device, a camera, a television, an appliance, a fitness device, or a vehicle.
Clause 4: The system of any of clauses 1-3, wherein the current status of the audio output device as worn includes partially worn.
Clause 5: The system of any of clauses 1-4, wherein the at least one processor is further configured to, after routing the audio output signal from the electronic device to the audio output device if the current status of the audio output device is worn: periodically re-determine the current status of the audio output device from the received data as either worn or unworn, continue to route the audio output signal from the electronic device to the audio output device if the re-determined current status of the audio output device is worn, and cease routing the audio output signal to the audio output device and beginning to route the audio output signal to the audio output of the electronic device if the re-determined current status of the audio output device is unworn.
Clause 6: The system of any of clauses 1-5, wherein the system further comprises a status indicator of the audio output device, and the at least one processor is further configured to change a status of the status indicator based on the received data.
Clause 7: An audio output device comprising the system of any of clauses 1-6.
Clause 8: A method of routing of an audio output signal from an electronic device to an audio output device, the method comprising: obtaining data from at least one inertial measurement unit (IMU) of the audio output device; from the obtained data, determining a current status of the audio output device as either worn or unworn; routing an audio output signal from the electronic device to the audio output device if the current status of the audio output device is worn; and routing the audio output signal to an audio output of the electronic device if the current status of the audio output device is unworn.
Clause 9: The method of clause 8, wherein the audio output device comprises: an earbud having one IMU; a set of two earbuds with a first IMU arranged in a first one of the two earbuds and a second IMU arranged in a second one of the two earbuds; or a set of headphones with a first IMU arranged in a first earphone unit of the set of headphones and a second IMU arranged in a second earphone unit of the set of headphones.
Clause 10: The method of clause 8 or clause 9, wherein the electronic device is a smart phone, a tablet, an e-reader, a wearable device, a smart watch, a laptop, a gaming device, a computer, a stereo, a tuner, a smart home device, a home automation device, a camera, a television, an appliance, a fitness device, or a vehicle.
Clause 11: The method of any of clauses 8-10, wherein the current status of the audio output device as worn includes partially worn.
Clause 12: The method of any of clauses 8-11, further comprising, after routing the audio output signal from the electronic device to the audio output device if the current status of the audio output device is worn: periodically re-determining the current status of the audio output device from the obtained data as either worn or unworn, continuing to route the audio output signal from the electronic device to the audio output device if the re-determined current status of the audio output device is worn, and ceasing routing the audio output signal to the audio output device and beginning to route the audio output signal to the audio output of the electronic device if the re-determined current status of the audio output device is unworn.
Clause 12: The method of any of clauses 8-12, further comprising changing a status of a status indicator of the audio output device based on the obtained data.

Various embodiments of systems, devices, and methods have been described herein. These embodiments are given only by way of example and are not intended to limit the scope of the claimed inventions. It should be appreciated, moreover, that the various features of the embodiments that have been described may be combined in various ways to produce numerous additional embodiments. Moreover, while various materials, dimensions, shapes, configurations and locations, etc. have been described for use with disclosed embodiments, others besides those disclosed may be utilized without exceeding the scope of the claimed inventions.

Persons of ordinary skill in the relevant arts will recognize that the subject matter hereof may comprise fewer features than illustrated in any individual embodiment described above. The embodiments described herein are not meant to be an exhaustive presentation of the ways in which the various features of the subject matter hereof may be combined. Accordingly, the embodiments are not mutually exclusive combinations of features; rather, the various embodiments can comprise a combination of different individual features selected from different individual embodiments, as understood by persons of ordinary skill in the art. Moreover, elements described with respect to one embodiment can be implemented in other embodiments even when not described in such embodiments unless otherwise noted.

Although a dependent claim may refer in the claims to a specific combination with one or more other claims, other embodiments can also include a combination of the dependent claim with the subject matter of each other dependent claim or a combination of one or more features with other dependent or independent claims. Such combinations are proposed herein unless it is stated that a specific combination is not intended.

Any incorporation by reference of documents above is limited such that no subject matter is incorporated that is contrary to the explicit disclosure herein. Any incorporation by reference of documents above is further limited such that no claims included in the documents are incorporated by reference herein. Any incorporation by reference of documents above is yet further limited such that any definitions provided in the documents are not incorporated by reference herein unless expressly included herein.

For purposes of interpreting the claims, it is expressly intended that means plus function interpretation be applied unless the specific terms "means for" or "step for" are recited in a claim.

## Claims

1. A system for improving routing of an audio output signal from an electronic device to an audio output device, the system comprising:
at least one inertial measurement unit (IMU) arranged in the audio output device; and
at least one processor configured to:
receive data from the at least one IMU,
determine a current status of the audio output device from the received data as either worn or unworn,
route an audio output signal from the electronic device to the audio output device if the current status of the audio output device is worn, and
route the audio output signal to an audio output of the electronic device if the current status of the audio output device is unworn.

2. The system of claim 1, wherein the audio output device comprises:
an earbud having one IMU; or
a set of two earbuds with a first IMU arranged in a first one of the two earbuds and a second IMU arranged in a second one of the two earbuds; or
a set of headphones with a first IMU arranged in a first earphone unit of the set of headphones and a second IMU arranged in a second earphone unit of the set of headphones.

3. The system of claim 1 or claim 2, wherein the electronic device is a smart phone, a tablet, an e-reader, a wearable device, a smart watch, a laptop, a gaming device, a computer, a stereo, a tuner, a smart home device, a home automation device, a camera, a television, an appliance, a fitness device, or a vehicle.

4. The system of any of claims 1-3, wherein the current status of the audio output device as worn includes partially worn.

5. The system of any of claims 1-4, wherein the at least one processor is further configured to, after routing the audio output signal from the electronic device to the audio output device if the current status of the audio output device is worn:
periodically re-determine the current status of the audio output device from the received data as either worn or unworn,
continue to route the audio output signal from the electronic device to the audio output device if the re-determined current status of the audio output device is worn, and
cease routing the audio output signal to the audio output device and beginning to route the audio output signal to the audio output of the electronic device if the re-determined current status of the audio output device is unworn.

6. The system of any of claims 1-5, wherein the system further comprises a status indicator of the audio output device, and the at least one processor is further configured to change a status of the status indicator based on the received data.

7. An audio output device comprising the system of any of claims 1-6.

8. A method of routing of an audio output signal from an electronic device to an audio output device, the method comprising:
obtaining data from at least one inertial measurement unit (IMU) of the audio output device;
from the obtained data, determining a current status of the audio output device as either worn or unworn;
routing an audio output signal from the electronic device to the audio output device if the current status of the audio output device is worn; and
routing the audio output signal to an audio output of the electronic device if the current status of the audio output device is unworn.

9. The method of claim 8, wherein the audio output device comprises:
an earbud having one IMU; or
a set of two earbuds with a first IMU arranged in a first one of the two earbuds and a second IMU arranged in a second one of the two earbuds; or
a set of headphones with a first IMU arranged in a first earphone unit of the set of headphones and a second IMU arranged in a second earphone unit of the set of headphones.

10. The method of claim 8 or claim 9, wherein the electronic device is a smart phone, a tablet, an e-reader, a wearable device, a smart watch, a laptop, a gaming device, a computer, a stereo, a tuner, a smart home device, a home automation device, a camera, a television, an appliance, a fitness device, or a vehicle.

11. The method of any of claims 8-10, wherein the current status of the audio output device as worn includes partially worn.

12. The method of any of claims 8-11, further comprising, after routing the audio output signal from the electronic device to the audio output device if the current status of the audio output device is worn:
periodically re-determining the current status of the audio output device from the obtained data as either worn or unworn,
continuing to route the audio output signal from the electronic device to the audio output device if the re-determined current status of the audio output device is worn, and
ceasing routing the audio output signal to the audio output device and beginning to route the audio output signal to the audio output of the electronic device if the re-determined current status of the audio output device is unworn.

13. The method of any of claims 8-12, further comprising changing a status of a status indicator of the audio output device based on the obtained data.
